# EUROPEAN PATENT APPLICATION

(11) **EP 2 072 277 A1**
(43) Date of publication of application: **24.06.2009**
(21) Application number: 07829930.2
(22) Date of filing: 16.10.2007
(51) Int. Cl.: B43K 29/02, B43K 7/00, B43K 8/02, C09D 11/16, C09D 11/18

(54) **WRITING IMPLEMENT AND WRITING IMPLEMENT SET**

(30) Priority: 17.10.2006 JP 2006282124; 08.12.2006 JP 2006331292
(71) Applicant: THE PILOT INK CO., LTD., Nagoya-shi, Aichi-ken 466-8588 (JP)
(72) Inventor: FUJITA, Katsuyuki, Nagoya-shi, Aichi 866-8588 (JP); TAKASU, Youichi, Nagoya-shi, Aichi 866-8588 (JP); SENGA, Kuniyuki, Nagoya-shi, Aichi 866-8588 (JP)
(74) Representative: HOFFMANN EITLE
(86) International application number: PCT/JP2007/070196
(87) International publication number: WO 2008/047805

(57) **Abstract**

Provided are a writing instrument produced at a lower cost than conventional thermochromic writing instruments utilizing frictional heat, slim like a pencil and not bulky because it contains an ink directly in a barrel thereof, and excellent in portability; and a set of the writing instruments.

The writing instrument 1 is obtained by directly filling a barrel thereof with an ink 2 which becomes colorless or colored, or undergoes a color change by heating and an ink follower 5 following the ink with its consumption; firmly fixing a writing tip portion 3 to the end of the barrel directly or via a relay member; and disposing a friction body 6 having an elasticity at the rear end portion of the barrel. The writing instrument set has a plurality of the writing instruments respectively different from each other in color tone.

## Description

### Technical Field

The present invention relates to a writing instrument. More specifically, it pertains to a writing instrument and a writing instrument set giving a handwriting which becomes colorless or colored, or undergoes a color change by an application of frictional heat.

### Background Art

Pencils or mechanical pencils using a solid pencil tip such as lead have conventionally been used as a writing instrument giving an erasable handwriting and the handwriting can be erased with a rubber eraser. As a writing instrument directly containing therein an ink which undergoes a color change by heating, there is disclosed a thermochromic writing instrument which changes the color of a handwriting by frictional heat caused by a friction body (refer to, for example, Patent Document 1).
The above-described thermochromic writing instrument utilizing frictional heat can visualize an interchangeable color change of a thermochromic handwriting from a colored one to a colorless one or from a colored one to a colored one having another color tone by using frictional heat caused by a friction body which is a simple friction means so that it is useful as, for example, a learning, teaching, or toy element.
It is also disclosed that the above-described friction body disposed at the rear end portion of the barrel of the writing instrument satisfies portability.
Patent Document 1: Japanese Patent Unexamined Publication No. JP-A-2003-206432

### Disclosure of the Invention

### Problems that the Invention is to Solve

Although it is disclosed that the friction body of the above-described thermochromic writing instrument utilizing frictional heat is disposed at the rear end portion of its barrel, the writing instrument houses, in the barrel thereof, a ballpoint pen refill containing an ink directly therein. Thus, it needs a high production cost because of an increase in the number of parts constituting the writing instrument and at the same time, the barrel containing the refill therein tends to become thick and bulky.
Moreover, when like a set of color pencils, a writing instrument set capable of forming handwritings different in color tone is produced using a plurality of writing instruments, use of the above-described writing instrument makes the set bulky and unportable.

### Means for Solving the Problems

According to a writing instrument of the present invention is
a writing instrument including:
a barrel in which a barrel with an ink which loses color, develops color, or changes color by heating; and an ink follower following the ink with the consumption thereof are directly filled therein; and
a writing tip portion which is firmly fixed to an end of the barrel directly or via a relay member,
wherein a friction body having an elasticity is provided at a rear end portion of the barrel, or
a writing instrument including:
a barrel in which an ink which loses color, develops color, or changes color by heating; and an ink follower following the ink with the consumption thereof are directly filled therein;
a writing tip portion which is firmly fixed to an end of the barrel directly or via a relay member; and
a cap covering the writing tip portion therewith,
wherein a friction body having an elasticity is provided at a rear end portion of the barrel and/or an end portion of the cap.
Further, according to the present invention, in the above-described writing instrument followings are adaptable.
The barrel has a light blocking property.
The ink includes a microencapsulated pigment which contains, therein, a reversible thermochromic composition including at least (i) an electron donating color-developing organic compound, (ii) an electron accepting compound, and (iii) a reaction medium for controlling a color reaction between the components (i) and (ii) and changes color from colored to colorless by heating.
The microencapsulated pigment shows, in a color concentration-temperature curve thereof, large hysteresis characteristics, exhibits interchangeability between a first color phase and a second color phase, and the microencapsulated pigment has a two-phase retaining temperature range permitting co-existence of the first and second color phases within a normal temperature range;
in a first color-phase state and under a temperature rising stage, the pigment starts color change from the first color phase when the pigment reaches a second temperature T₃, and the pigment becomes the second color phase completely in a temperature range of at least a temperature T₄ higher than the second temperature T₃,
in a second color-phase state and under a temperature reducing stage, the pigment starts color change from the second color phase when the pigment reaches a first temperature T₂ lower than the second temperature T₃, and the pigment becomes the first color phase completely in a temperature range not greater than a temperature T₁ lower than the first temperature T₂,
the pigment shows, in a temperature range between the first temperature T₂ and the second temperature T₃, hysteresis characteristics permitting co-existence of both the first color phase and the second color phase,
the temperature T₁ is ranging from -30 to 10°C,
the temperature T₄ is ranging from 30 to 80°C.
The friction body is selected from elastomers and plastic foams.
The barrel and the friction body are firmly fixed to each other via a connecting member.
The connecting member also serves as the barrel; and wherein the writing tip portion is a ballpoint pen tip.
The writing instruments are filled with inks different from each other in color tone, respectively.

### Advantage of the Invention

The writing instrument according to the present invention can be produced at a lower cost than conventional thermochromic writing instruments utilizing frictional heat, is slim like a pencil, not bulky, and excellent in portability because it is designed to fill an ink directly in a barrel thereof.
In addition, although a writing instrument set capable of forming handwritings different in color tone is constructed of a plurality of the above-described writing instruments, it does not become bulky so that the present invention can provide a writing instrument set permitting carrying of many writing instruments different in color and therefore satisfying convenience.

### Brief Description of the Drawings

FIG. 1 is a graph of a color concentration-temperature curve illustrating hysteresis characteristics of a thermally erasable type reversible thermochromic composition used in the present invention;
FIG. 2 is a graph of a color concentration-temperature curve illustrating hysteresis characteristics of another thermally erasable type reversible thermochromic composition used in the present invention;
FIG. 3 is a graph of a color concentration-temperature curve illustrating hysteresis characteristics of a thermally color-developing type reversible thermochromic composition used in the present invention;
FIG. 4 is a longitudinal cross-sectional view illustrating one example of the writing instrument of the present invention;
FIG. 5 is a front view of the writing instrument of FIG. 3;
FIG. 6 is a longitudinal cross-sectional view illustrating another example of the writing instrument of the present invention;
FIG. 7 is a longitudinal cross-sectional view illustrating a further example of the writing instrument of the present invention;
FIG. 8 is a longitudinal cross-sectional view illustrating a still further example of the writing instrument of the present invention;
FIG. 9 is a longitudinal cross-sectional view illustrating a still further example of the writing instrument of the present invention;
FIG. 10 is a longitudinal cross-sectional view illustrating a still further example of the writing instrument of the present invention;
FIG. 11 is a longitudinal cross-sectional view illustrating a still further example of the writing instrument of the present invention; and
FIG. 12 is a longitudinal cross-sectional view illustrating a still further example of the writing instrument of the present invention.

### Explanation of numeral references

t₁: Complete color-developing temperature
t₂: Color-development starting temperature
t₃: Color-erasure starting temperature
t₄: Complete color-erasing temperature
T₁: Complete color-erasing temperature
T₂: Color-erasure starting temperature
T_{3:} Color-development starting temperature
T₄: Complete color-developing temperature
ΔH: Hysteresis width
1: Writing instrument
2: Ink
3: Writing tip portion
4: Barrel
5: Ink follower
6: Friction body
7: Cap
8: Rubber seal
9: Relay member
10: Connecting member
11: Clip
12: Tail plug
13: Protrusion

### Best Mode for Carrying out the Invention

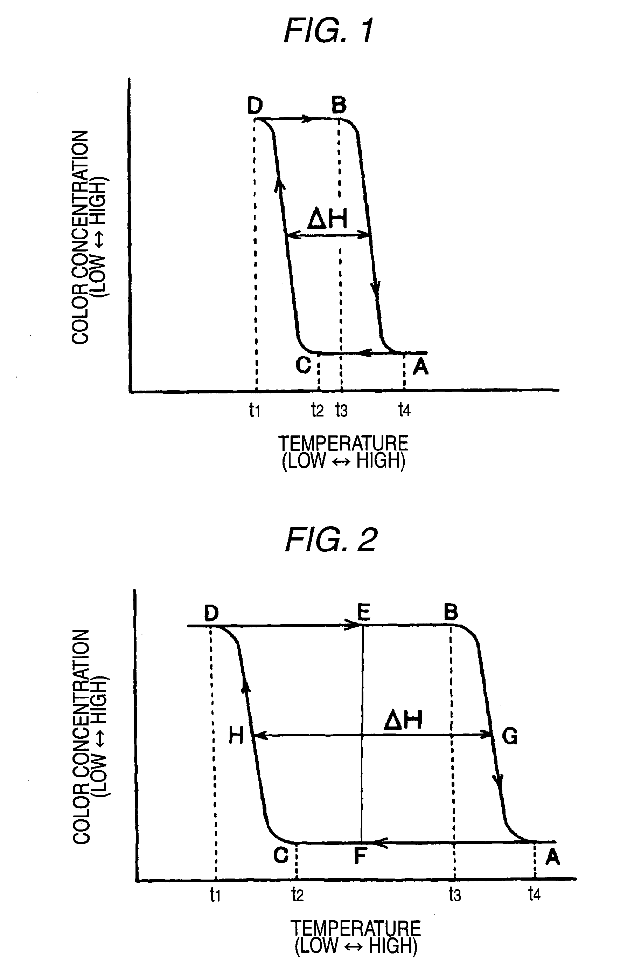

The writing instrument contains therein an ink which becomes colorless or colored, or undergoes a color change by heating. An effective colorant to be contained in the ink is a microencapsulated pigment which is obtained by enclosing, in a microcapsule, a reversible thermochromic composition containing at least three essential components, that is, (i) an electron donating color-developing organic compound, (ii) an electron accepting compound, and (iii) a reaction medium which determines the temperature causing a color reaction between these compounds and becomes colorless by heating.
As the reversible thermochromic composition, it is possible to use a composition having a relatively small hysteresis width (ΔH = from 1 to 7°C), as described in Japanese Patent Examined Publications Nos. JP-B-51-44706, JP-B-51-44707, or JP-B-1-29398.
That is, the composition undergoes a color change with a predetermined temperature (point of color change) as a borderline;
the composition is in a colorless state in a high-temperature-side temperature range not lower than the point of color change;
the composition is in a colored state in a low-temperature-side temperature range not higher than the point of color change;
the composition is in one particular state of the two states in the normal temperature range; and
even if the other state is maintained while heat or cold heat necessary for appearance of the state is applied, it returns to the state in the normal temperature range without application of heat or cold heat (refer to FIG. 1).
However, it is preferable to use a reversible thermochromic composition having large hysteresis characteristics (ΔH = from 8 to 70°C), as described in Japanese Patent Unexamined Publications Nos. JP-A-4-17154, JP-A-7-179777, JP-A-7-33997, JP-A-8-39936, or JP-A-2005-1369.
The preferable composition undergoes a color change, following greatly different courses, in a curve plotting a change in color concentration due to a temperature change, between when a temperature is raised from a lower temperature side than a color-change temperature range and when a temperature is decreased from a higher temperature side than the color-change temperature range, and can retain, in a certain temperature range, a color state in a low temperature range or a colorless state in a high temperature range, thus having a color memorizing property (refer to FIG. 2).

The hysteresis characteristics of the reversible thermochromic composition in the color concentration-temperature curve will next be described.
In FIG. 2, a color concentration is plotted along the axis of ordinate, while a temperature is plotted along the axis of abscissa. A change in color concentration due to a temperature change shifts along an arrow. In the graph,
A is a point representing a concentration at a temperature t₄ (which will hereinafter be called "complete color-erased temperature") at which the color is erased completely;
B is a point representing a concentration at a temperature t₃ (which will hereinafter be called "color-erasing starting temperature") at which color erasing is started;
C is a point representing a concentration at a temperature t₂ (which will hereinafter be called "color-development starting temperature) at which color development is started; and
D is a point representing a concentration at a temperature t₁ (which will hereinafter be called "complete color-developed temperature") at which the color is developed completely.
The color-change temperature range is present between the t₁ and the t₄ and a temperature range between t₂ and t₃ in which both the first color phase and the second color phase are present at the same time and a difference in color concentration is large is a substantial color-change temperature range (two-phase retaining temperature range).
The length of the line EF is a measure showing the contrast of a color change and the length of the line HG passing a center of the line EF is a temperature width (which will hereinafter be called "hysteresis width ΔH") showing the degree of hysteresis. When the value ΔH is small, only a predetermined one of two states before and after color change is present in a normal temperature range. Large values ΔH, on the other hand, facilitate retention of both states before and after color change.

More specifically, by setting following parameters, the composition can effectively function to retain the color developed under a normal state (ordinary-life temperature range). The settings are:
the complete color-developed temperature t₁ of the reversible thermochromic composition having a color memorizing property within a temperature range which occurs only in a refrigerator or a cold region, that is, from -30 to 10°C, preferably from - 30 to 0°C, more preferably from -30 to -10°C;
the complete color-erased temperature t₄ within a temperature range available from frictional heat caused by a friction body, that is, from 30 to 90°C, preferably from 50 to 80°C, more preferably from 60 to 80°C; and
the value ΔH to from 40 to 60°C.
It is preferred that the writing instrument of the present invention is filled with an ink containing a microencapsulated pigment having, enclosed therein, a reversible thermochromic composition under a colored state, a handwriting formed by the writing instrument is not erased easily by finger touch or the like, and a handwriting once erased does not appear again.
Accordingly, the temperature setting of the t₁ and t₄ becomes a very important for the present invention.

Specific examples of the compounds of each of the components (i), (ii), and (iii) will next be described.
Examples of the component (i) of the present invention, that is, the electron donating color-developing organic compound include diphenylmethane phthalides, phenylindolyl phthalides, indolyl phthalides, diphenylmethane azaphthalides, phenylindolyl azaphthalides, fluorans, styrynoquinolines, and diazarhodamine lactones.
The following are specific examples of these compounds: 3,3-bis(p-dimethylaminophenyl)-6-dimethylaminophthalide, 3-(4-diethylaminophenyl)-3-(1-ethyl-2-methylindol-3-yl)phthalide, 3,3-bis(1-n-butyl-2-methylindol-3-yl)phthalide, 3,3-bis(2-ethoxy-4-diethylaminophenyl)-4-azaphthalide, 3-[2-ethoxy-4-(N-ethylanilino)phenyl]-3-(1-ethyl-2-methylindol-3-yl)-4-azaphthalide, 3,6-diphenylaminofluoran, 3,6-dimethoxyfluoran, 3,6-di-n-butoxyfluoran, 2-methyl-6-(N-ethyl-N-p-tolylamino)fluoran, 3-chloro-6-cyclohexylaminofluoran, 2-methyl-6-cyclohexylaminofluoran, 2-(2-chloroanilino)-6-di-n-butylaminofluoran, 2-(3-trifluoromethylanilino)-6-diethylaminofluoran, 2-(N-methylanilino)-6-(N-ethyl-N-p-tolylamino)fluoran, 1,3-dimethyl-6-diethylaminofluoran, 2-chloro-3-methyl-6-diethylaminofluoran, 2-anilino-3-methyl-6-diethylaminofluoran, 2-anilino-3-methyl-6-di-n-butylaminofluoran, 2-xylidino-3-methyl-6-diethylaminofluoran, 1,2-benz-6-diethylaminofluoran, 1,2-benz-6-(N-ethyl-N-isobutylamino)fluoran, 1,2-benz-6-(N-ethyl-N-isoamylamino)fluoran, 2-(3-methoxy-4-dodecoxystyryl)quinoline, spiro[5H-(1)benzopyrano(2,3-d)pyrimidin-5,1'(3'H)isobenzofuran]-3'-one, 2-(diethylamino)-8-(diethylamino)-4-methyl-spiro[5H-(1)benzopyrano(2,3-d)pyrimidin-5,1'(3'H)isobenzofuran]-3'-one, 2-(di-n-butylamino)-8-(di-n-butylamino)-4-methyl-spiro[5H-(1)benzopyrano(2,3-d)pyrimidin-5,1'(3'H)isobenzofuran]-3'-one, 2-(di-n-butylamino)-8-(diethylamino)-4-methyl-spiro[5H-(1)benzopyrano(2,3-d)pyrimidin-5,1'(3'H)isobenzofuran]-3'-one, 2-(di-n-butylamino)-8-(N-ethyl-N-i-amylamino)-4-methyl-spiro[5H-(1)benzopyrano(2,3-d)pyrimidin-5,1'(3'H)isobenzofuran]-3'-one, 3-(2-methoxy-4-dimethylaminophenyl)-3-(1-butyl-2-methylindol-3-yl)-4,5,6,7-tetrachlorophthalide, 3-(2-ethoxy-4-diethylaminophenyl)-3-(1-ethyl-2-methylindol-3-yl)-4,5,6,7-tetrachlorophthalide, and 3-(2-ethoxy-4-diethylaminophenyl)-3-(1-pentyl-2-methylindol-3-yl)-4,5,6,7-tetrachlorophthalide.
Further examples include pyridine, quinazoline and bisquinazoline compounds effective for developing a fluorescent yellow to red color.

The electron accepting compound as the component (ii) is selected from, for example, a group of compounds having an active proton, a group of pseudo-acidic compounds (which are not real acids but act as acids in the composition to develop the color of the component (i)), and a group of compounds having an electron hole.
Examples of the compounds having an active proton include compounds having a phenolic hydroxyl group such as monophenols and polyphenols, these compounds having a subsistent such as alkyl group, aryl group, acyl group, alkoxycarbonyl group, carboxyl group or ester thereof, amide group or halogen group; bis or tris phenols; and phenol-aldehyde condensation resins. They may be metal salts of the above-described compounds having a phenolic hydroxyl group.

The following are specific examples of the electron-accepting compound.
Examples include:
phenol,
o-cresol,
tertiary butylcatechol,
nonylphenol,
n-octylphenol,
n-dodecylphenol,
n-stearylphenol,
p-chlorophenol,
p-bromophenol,
o-phenylphenol,
n-butyl p-hydroxybenzoate,
n-octyl p-hydroxybenzoate,
resorcin,
dodecyl gallate,
2,2-bis(4-hydroxyphenyl)propane,
4,4-dihydroxydiphenyl sulfone,
1,1-bis(4-hydroxyphenyl)ethane,
2,2-bis(4-hydroxy-3-methylphenyl)propane,
bis(4-hydroxyphenyl)sulfide,
1-phenyl-1,1-bis(4-hydroxyphenyl)ethane,
1,1-bis(4-hydroxyphenyl)-3-methylbutane,
1,1-bis(4-hydroxyphenyl)-2-methylpropane,
1,1-bis(4-hydroxyphenyl)-n-hexane,
1,1-bis(4-hydroxyphenyl)-n-heptane,
1,1-bis(4-hydroxyphenyl)-n-octane,
1,1-bis(4-hydroxyphenyl)-n-nonane,
1,1-bis(4-hydroxyphenyl)-n-decane,
1,1-bis(4-hydroxyphenyl)-n-dodecane,
2,2-bis(4-hydroxyphenyl)-butane,
2,2-bis(4-hydroxyphenyl)ethyl propionate,
2,2-bis(4-hydroxyphenyl)-4-methylpentane,
2,2-bis(4-hydroxyphenyl)hexafluoropropane,
2,2-bis(4-hydroxyphenyl)-n-heptane, and
2,2-bis(4-hydroxyphenyl)-n-nonane.
Although these compounds having a phenolic hydroxyl group can exhibit the most effective thermochromism characteristics, the component (ii) may be any compound selected from aromatic carboxylic acids, aliphatic carboxylic acids having from 2 to 5 carbon atoms, metal salts of carboxylic acids, acidic phosphate esters and metal salts thereof, and 1,2,3-triazole and derivatives thereof.

The component (iii) which is a reaction medium for reversibly causing an electron-donating/accepting reaction between the components (i) and (ii) within a specified temperature range will next be described. Examples of the component (iii) include alcohols, esters, ketones, ethers, and acid amides.
As the component (iii), preferred are carboxylate ester compounds having a ΔT value [(melting point)-(cloud point)] of 5°C or greater but less than 50°C and capable of forming a reversible thermochromic composition which undergoes a color change with great hysteresis characteristics in a color concentration-temperature curve of the composition (curves obtained by plotting a change in color concentration in response to a temperature change are different between the case where the temperature is changed from a low temperature to a high temperature and in the case where the temperature is changed from the high temperature to the low temperature) and thus shows a color memorizing property.
Examples of such a compound include:
carboxylate esters having, in the molecule thereof, a substituted aromatic ring,
esters of a carboxylic acid containing an unsubstituted aromatic ring with an aliphatic alcohol having 10 or more carbon atoms,
carboxylate esters having, in the molecule thereof, a cyclohexyl group,
esters of a fatty acid having 6 or more carbon atoms with an unsubstituted aromatic alcohol or phenol,
esters of a fatty acid having 8 or more carbon atoms with a branched aliphatic alcohol, esters of a dicarboxylic acid with an aromatic alcohol or branched aliphatic alcohol, dibenzyl cinnamate, heptyl stearate, didecyl adipate, dilauryl adipate, dimyristyl adipate, dicetyl adipate, distearyl adipate, trilaurin, trimyristin, tristearin, dimyristin, and distearin.

Fatty acid ester-compounds available from aliphatic monohydric alcohols having 9 or a greater odd number of carbon atoms and an aliphatic carboxylic acid having an even number of carbon atoms and fatty acid ester compounds having from 17 to 23 carbon atoms in total available from n-pentyl alcohol or n-heptyl alcohol and an aliphatic carboxylic acid having an even number, from 10 to 16, of carbon atoms are also effective.
Specific examples include:
n-pentadecyl acetate,
n-tridecyl butylate,n-pentadecyl butyrate,
n-undecyl caproate, n-tridecyl caproate, n-pentadecyl caproate,
n-nonyl caprylate, n-undecyl caprylate, n-tridecyl caprylate, n-pentadecyl caprylate,
n-heptyl caprate, n-nonyl caprate, n-undecyl caprate, n-tridecyl caprate, n-pentadecyl caprate,
n-pentyl laurate, n-heptyl laurate, n-nonyl laurate, n-undecyl laurate, n-tridecyl laurate, n-pentadecyl laurate,
n-pentyl myristate, n-heptyl myristate, n-nonyl myristate, n-undecyl myristate, n-tridecyl myristate, n-pentadecyl myristate,
n-pentyl palmitate, n-heptyl palmitate, n-nonyl palmitate, n-undecyl palmitate, n-tridecyl palmitate, n-pentadecyl palmitate,
n-nonyl stearate, n-undecyl stearate, n-tridecyl stearate, n-pentadecyl stearate,
n-nonyl eicosanoate, n-undecyl eicosanoate, n-tridecyl eicosanoate, n-pentadecyl eicosanoate,
n-nonyl behenate, n-undecyl behenate, n-tridecyl behenate, and n-pentadecyl behenate.

As the ketones, aliphatic ketones having 10 or more carbon atoms in total are effective and examples include:
2-decanone, 3-decanone, 4-decanone, 2-undecanone, 3-undecanone, 4-undecanone, 5-undecanone, 2-dodecanone, 3-dodecanone, 4-dodecanone, 5-dodecanone, 2-tridecanone,
3-tridecanone, 2-tetradecanone, 2-pentadecanone, 8-pentadecanone, 2-hexadecanone, 3-hexadecanone, 9-heptadecanone, 2-pentadecanone, 2-octadecanone, 2-nonadecanone,
10-nonadecanone, 2-eicosanone, 11-eicosanone, 2-heneicosanone, 2-docosanone, laurone, and stearone.
Examples of aryl alkyl ketones having from 12 to 24 carbon atoms in total include:
n-octadecanophenone, n-heptadecanophenone, n-hexadecanophenone, n-pentadecanophenone, n-tetradecanophenone, 4-n-dodecaacetophenone, n-tridecanophenone, 4-n-undecanoacetophenone, n-laurophenone, 4-n-decanoacetophenone, n-undecanophenone, 4-n-nonylacetophenone, n-decanophenone, 4-n-octylacetophenone, n-nonanophenone, 4-n-heptylacetophenone, n-octanophenone, 4-n-hexylacetophenone, 4-n-cyclohexylacetophenone, 4-tert-butylpropiophenone, n-heptaphenone, 4-n-pentylacetophenone, cyclohexyl phenyl ketone, benzyl n-butyl ketone, 4-n-butylacetophenone, n-hexanophenone, 4-isobutylacetophenone, 1-acetonaphthone, 2-acetonaphthone, and cyclopentyl phenyl ketone.

As the ethers, aliphatic ethers having 10 or more carbon atoms in total are effective. Examples include:
dipentyl ether, dihexyl ether, diheptyl ether, dioctyl ether, dinonyl ether, didecyl ether, diundecyl ether, didodecyl ether, ditridecyl ether, ditetradecyl ether, dipentadecyl ether, dihexadecyl ether, dioctadecyl ether, decanediol dimethyl ether, undecanediol dimethyl ether, dodecanediol dimethyl ether, tridecanediol dimethyl ether, decanediol diethyl ether, and undecanediol diethyl ether.

As the component (iii), compounds of the following formula (1) as described in Japanese Patent Unexamined Publication Nos. JP-A-2006-137886 and compounds of the following formula (2) as described in Japanese Patent Unexamined Publication No. JP-A-2006-188660 are preferred.

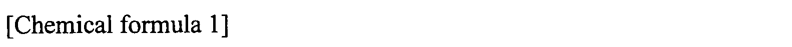

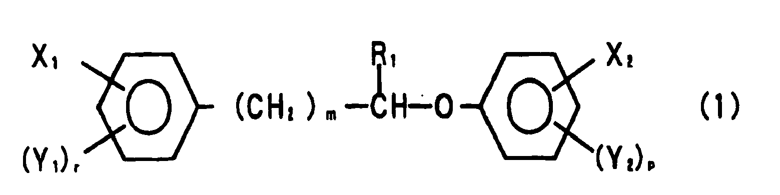

[wherein, R₁ represents a hydrogen atom or a methyl group, m stands for an integer from 0 to 2,
either one of X₁ and X₂ represents -(CH₂)ₙOCOR₂ or -(CH₂)ₙCOOR₂ and the other one represents a hydrogen atom, n stands for an integer from 0 to 2,
R₂ represents an alkyl or alkenyl group having 4 or more carbon atoms,
Y₁ and Y₂ each represents a hydrogen atom, an alkyl group having from 1 to 4 carbon atoms, a methoxy group, or a halogen, and
r and p each stands for an integer from 1 to 3].

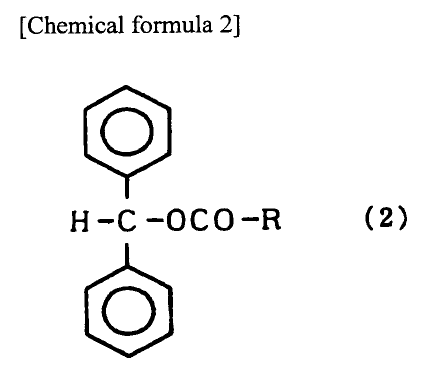

[wherein, R represents an alkyl or alkenyl group having 8 or more carbon atoms].

Of the compounds represented by the formula (1), those having a hydrogen atom as R₁ are preferred because a reversible thermochromic composition having a greater hysteresis width is available. Those of the formula (1) in which R₁ represents a hydrogen atom and m stands for 0 are more preferred.
In the formula (2), R represents an alkyl or alkenyl group having 8 or more carbon atoms, preferably an alkyl group having from 10 to 24 carbon atoms, more preferably an alkyl group having from 12 to 22 carbon atoms.
Specific examples of the compound include:
4-benzyloxyphenylethyl octanoate,
4-benzyloxyphenylethyl nonanoate,
4-benzyloxyphenylethyl decanoate,
4-benzyloxyphenylethyl undecanoate,
4-benzyloxyphenylethyl dodecanate,
4-benzyloxyphenylethyl tridecanoate,
4-benzyloxyphenylethyl tetradecanoate,
4-benzyloxyphenylethyl pentadecanoate,
4-benzyloxyphenylethyl hexadecanoate,
4-benzyloxyphenylethyl heptadecanoate,
4-benzyloxyphenylethyl octadecanoate,
1,1-diphenylmethyl octanoate,
1,1-diphenylmethyl nonanoate,
1,1-diphenylmethyl decanoate,
1,1-diphenylmethyl undecanoate,
1,1-diphenylmethyl dodecanate,
1,1-diphenylmethyl tridecanoate,
1,1-diphenylmethyl tetradecanoate,
1,1-diphenylmethyl pentadecanoate,
1,1-diphenylmethyl hexadecanoate,
1,1-diphenylmethyl heptadecanoate, and
1,1-diphenylmethyl octadecanoate.

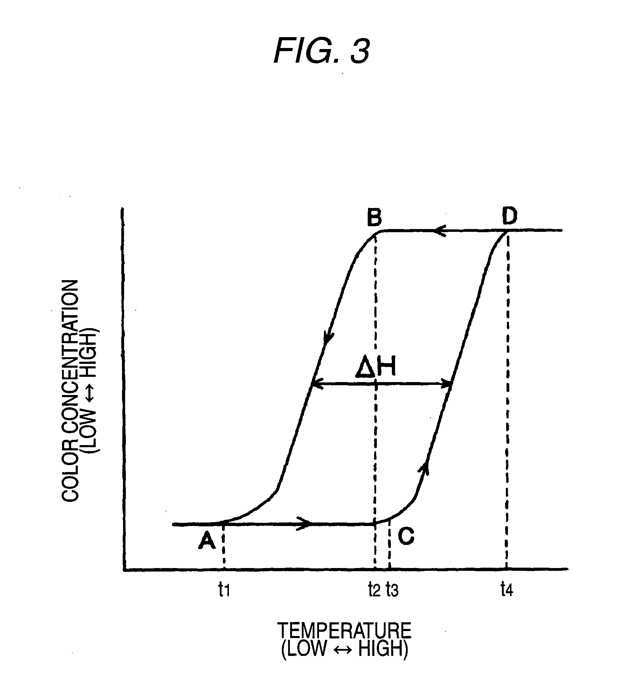

Moreover, as the reversible thermochromic composition including at least three components, that is, the (i) electron donating color-developing organic compound, (ii) the electron accepting compound, and (iii) the reaction medium which determines the temperature causing a color reaction between these two compounds, a thermally color-developing reversible thermochromic composition (Japanese Patent Unexamined Publication No. JP-A-2003-253149) using a gallate ester as the electron accepting compound can also be used (refer to FIG. 3).
The color concentration-temperature curve in FIG. 3 will next be described specifically. A change in the color concentration due to a temperature change shifts along an arrow.
Point A is a point representing a concentration at a temperature T₁ (which will hereinafter be called "complete color-erased temperature") at which the color is erased completely.
Point B is a point representing a concentration at a temperature T₂ (which will hereinafter be called "color-erasing starting temperature") at which color erasing is started.
Point C is a point representing a concentration at a temperature T₃ (which will hereinafter be called "color-development starting temperature") at which color development is started.
Point D is a point representing a concentration at a temperature T₄ (which will hereinafter be called "complete color-developed temperature") at which the color is developed completely.

Although use of the microencapsulated pigment having a round cross-section is not refused, but microencapsulated pigment having a non-round cross-section is more effective.
The handwriting formed by writing shows color development with high concentration because the microencapsulated pigments are densely aligned and firmly fixed while bringing the long diameter side (maximum outer diameter side) into close contact with the written surface. At the same time, the microencapsulated pigment undergoes subtle elastic deformation into a shape so as to relax the external force occurring due to scratching of the handwriting with a rubbing body (friction body) such as rubber so that destruction of the wall membrane of the microcapsule is suppressed and color can be developed effectively without impairing its thermochromic function.
The microencapsulated pigment having a non-round cross-section has preferably an average maximum outer diameter falling within a range of from 0.5 to 5.0 µm and at the same time, satisfies a reversible thermochromic composition/wall membrane ratio ranging from 7/1 to 1/1 (weight ratio).
A microencapsulated pigment (including that having a round cross-section) system having an average maximum outer diameter exceeding 5.0 µm becomes inferior in ink flow from capillary gaps, while that having an average maximum outer diameter not greater than 0.5 µm does not easily exhibit high-concentration color development. The microcapsule has an average maximum outer diameter of preferably from 1 to 4 µm and an average particle size [(maximum outer diameter)+(minimum outer diameter at the center portion)/2] of preferably from 1 to 3 µm.
When a reversible thermochromic composition/wall membrane ratio exceeds the above-described range, the wall membrane becomes excessively thin, leading to reduction in the durability against pressure or heat. When a wall membrane/reversible thermochromic composition ratio exceeds the above-described range, on the other hand, the color concentration and vividness at the time of color development inevitably decrease. The reversible thermochromic composition/wall membrane ratio is therefore preferably within a range of from 6/1 to 1/1 (weight ratio).

The microencapsulation of the reversible thermochromic composition is performed, for example, by interfacial polymerization, interfacial polycondensation, in-situ polymerization, hardening and coating in solution, phase separation from an aqueous solution, phase separation from an organic solvent, melting dispersing cooling, in-gas suspending coating, or spray drying methods. A proper process is selected, depending on the intended use. It is also possible to impart the surface of the microcapsule with durability by forming a secondary resin film thereon, depending on the purpose or to modify the surface properties of the microcapsule before it is provided for practical use.

The microencapsulated pigment may be incorporated in an amount of from 2 to 50 wt.% (preferably from 3 to 40 wt.%, more preferably from 4 to 30 wt.%) based on the total amount of the ink composition. When the amount is less than 2 wt.%, a color concentration is insufficient. The amounts exceeding 50 wt.%, on the other hand, deteriorate ink flow and inhibit a smooth writing property.

As the ink, an ink obtained by dispersing a microencapsulated pigment in a vehicle is effective. As the vehicle, water-base vehicles are preferred, but oil-base vehicles are also usable.
Specific examples of it include shear thinning inks containing a shear thinning agent.
Addition of the shear thinning agent enables to form good writing because it can prevent aggregation and precipitation of a microencapsulated pigment and at the same time, prevent bleeding of writing.
Further, when the writing instrument to be filled with an ink is a ballpoint pen, addition of the agent can prevent leakage of an ink from the gap between the ball and the tip at the time of not using the ballpoint pen or prevent backflow of an ink when the ballpoint pen is left with the tip portion up (the ballpoint pen is erected).

Examples of the shear thinning agent include:
xanthan gum, wellan gum, succinoglycan which is a heteropolysaccharide modified with an organic acid having, as a constituent monosaccharide, glucose and galactose (average molecular weight of from about one 100 to 8,000,000), guar gum, locust bean gum and derivatives thereof, hydroxyethyl cellulose, alkyl alginate esters, polymer composed mainly of an alkyl methacrylate and having a molecular weight of from 100,000 to 150,000, glucomannan, polysaccharide thickeners having a gelation ability extracted from seaweeds e.g., agar, carrageenin and the like,
benzylidene sorbitol and benzylidene xylitol and derivatives thereof,
crosslinking acrylic acid polymers,
inorganic fine particles,
polyglycerol fatty acid esters, polyoxyethylene sorbitan fatty acid esters, polyethylene glycol fatty acid esters, polyoxyethylene alkyl ether/polyoxypropylene alkyl ether, and polyoxyethylene alkylphenyl ethers, nonionic surfactants having an HLB of from 8 to 12, e.g., fatty acid amide,
salts of dialkyl- or dialkenyl-sulfosuccinic acid,
mixtures of an N-alkyl-2-pyrrolidone and an anionic surfactant and
mixtures of polyvinyl alcohol and an acrylic resin.

Water and, if necessary, a water-soluble organic solvent may be added to the ink.
Examples of the water-soluble organic solvent include: ethanol, propanol, butanol, glycerin, sorbitol, triethanolamine, diethanolamine, monoethanolamine, ethylene glycol, diethylene glycol, thiodiethylene glycol, polyethylene glycol, propylene glycol, butylene glycol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monobutyl ether, ethylene glycol monomethyl ether acetate, sulfolane, 2-pyrrolidone, and N-methyl-2-pyrrolidone.

When the ink is used by filling it in a ballpoint pen, it is preferred to add a lubricant such as:
a higher fatty acid such as oleic acid,
a nonionic surfactant having a long-chain alkyl group,
a polyether-modified silicone oil,
a thiophosphite triester such as tri(alkoxycarbonylmethylester) thiophosphite or tri(alkoxycarbonylethylester) thiophosphite,
a phosphate monoester of a polyoxyethylene alkyl ether or a polyoxyethylene alkyl aryl ether,
a phosphate diester of a polyoxyethylene alkyl ether or a polyoxyethylene alkyl aryl ether, or
a metal salt thereof, ammonium salt, amine salt, or alkanolamine salt thereof, thereby preventing wear of a ball receiving seat.

In addition to the above-described components, a resin such as acrylic resin, styrene-maleic acid copolymer, cellulose derivative, polyvinylpyrrolidone, polyvinyl alcohol or dextrin may also be added to impart a firmly fixing property to paper or viscosity to the resulting composition.
Further, a pH regulator, for example, an inorganic acid salt such as sodium carbonate, sodium phosphate, or sodium acetate or an organic basic compound such as water-soluble amine compound,
a rust inhibitive, for example, benzotriazole, tolyltriazole, dicyclohexyl ammonium nitrite, diisopropylammonium nitrite, or saponin,
an antiseptic or mildew proofing agent, for example, carbolic acid, sodium salt of 1,2-benzisothiazolin-3-one, sodium benzoate, sodium dehydroacetate, potassium sorbate, propyl paraoxybenzoate, or 2,3,5,6-tetrachloro-4-(methylsulfonyl)pyridine,
urea, a nonionic surfactant, a reducing or non-reducing starch hydrolyzate, an oligosaccharide such as trehalose, sucrose, cyclodextrin, glucose, dextrin sorbitol, mannitol, a humectant such as sodium pyrophosphate, a defoamer, a dispersant, a fluorine-containing surfactant for improving penetration of an ink or a nonionic surfactant may also be added.
The ink may contain a common dye or pigment (no- thermochromic) to show a color change behavior from a color (1) to another color (2).

The ink is filled directly in a writing instrument such as marking pen or ballpoint pen having, at the writing tip portion thereof, a marking pen tip or a ballpoint pen tip before it is provided for practical use..

When the ink is filled in a ballpoint pen, the ballpoint pen itself has, for example, the following structure: a shear-thinning ink is filled directly in a barrel of the ballpoint pen which is communicated with a ballpoint pen tip having a ball attached at the end portion thereof and an ink follower (ink backflow prevention body) which follows the ink with the consumption thereof is brought into close contact with the end surface of the ink.

The ballpoint pen tip will next be described in further detail. Examples of the ballpoint pen tip include:
a tip having a ball in a ball holding portion formed by deforming, inwardly from an outer surface, a metal pipe in the vicinity of its end under pressure,
a tip having a ball in a ball holding portion formed by machining a metal material with a drill or the like,
a metal or plastic tip having a ball receiving seat made of a resin inside the tip, and
a tip having a ball biased forward by a spring.
As the ball, that made of a hardmetal, stainless steel, ruby, ceramic, resin, rubber or the like and having a diameter of from about 0.3 mm to 3.0 mm, preferably from about 0.4 to 1.5 mm, more preferably from about 0.5 to 1.0 mm is usable.

As the barrel for containing the ink therein, a molded or formed product made of a thermoplastic resin such as polyethylene, polypropylene, polyethylene terephthalate or nylon is employed.
Use, as the barrel, of a light blocking barrel enables to prevent deterioration, due to light, of the ink contained therein.
The barrel may be connected directly to the writing tip portion or may be connected to the writing tip portion via a connecting member.

An ink follower is filled at a rear end of the ink contained in the barrel.
The ink follower comprises a nonvolatile liquid or a sparingly volatile liquid.
Specific examples include petrolatum, spindle oil, castor oil, olive oil, refined mineral oil, liquid paraffin, polybutene, α-olefin, oligomer or co-oligomer of α-olefin, dimethyl silicone oil, methyl phenyl silicone oil, amino-modified silicone oil, polyether-modified silicone oil, and fatty acid-modified silicone oil. They may be used either singly or in combination of two or more thereof.

It is preferred to add a gelling agent to the above-mentioned non-volatile liquid and/or sparingly volatile liquid to increase its viscosity to a suitable level. Examples of the gelling agent include:
clay-based thickeners such as silica having a surface subjected to hydrophobic treatment, fine particle silica having a surface subjected to methylation treatment, aluminum silicate, expandable mica, and bentonite or montmorillonite subjected to hydrophobic treatment;
fatty acid metal soaps such as magnesium stearate, calcium stearate, aluminum stearate and zinc stearate;
   tribenzylidene sorbitol;
   fatty acid amides;
   amide-modified polyethylene wax;
   hydrogenated castor oil;
   dextrin compounds such as a fatty acid dextrin; and
   cellulose compounds.
   Further, a solid ink follower can also be used in combination with the above-mentioned liquid ink follower.

The barrel has, at the rear end portion thereof, a friction body having an elasticity. The handwriting obtained by writing can be changed from a colored state to a colorless state, from a colored state to a colored state having another color tone, or a colorless state to a colored state by the application of the friction body.
In the case of a writing instrument equipped with a cap, a friction body having an elasticity may be disposed at the rear end portion of the barrel, a friction body having an elasticity may be disposed at the end portion of the cap, or a friction body having an elasticity may be disposed both at the rear end portion of the barrel and the end portion of the cap.
The friction body is made of preferably an elastic body, such as elastomer or plastic foam, having an elasticity and capable of generating friction heat because adequate friction occurs at the time of scratching.
An eraser may be used as the friction body, but it develops bits of grit during rubbing so that the above-described friction body is preferably employed.
As the material of the rubbing body, silicone resin, SBS resin (styrenebutadiene-styrene copolymer), SEBS resin (styrene-ethylene-butylene-styrene block copolymer) and the like are preferred, of which SBS resin and SEBS resin are more preferred because silicone resins are likely to attach to a portion erased by friction and a handwriting may therefore be repelled after writing in repetition. As the rubbing body, that having a Shore A hardness, according to JIS (Japanese Industrial Standard) K6253A, of 40 or greater is more preferred.
The rubbing body disposed at the rear end portion of the barrel or, when the writing instrument is equipped with a cap, the friction body disposed at the rear end portion of the barrel and/or at the end portion of the cap enables to produce a fine writing instrument excellent in portability at a low cost and at the same time, to relax an impact and prevent ink leakage (backflow of ink) even when the writing instrument drops accidentally and collides with a floor surface.
In the case of a writing instrument containing an ink directly in its barrel, an impact caused by dropping is stronger than that given to a conventional writing instrument containing a refill in its barrel so that the disposal of the friction body having an elasticity at the rear end portion of the barrel and/or at the end portion of the cap is a useful constitution for improving impact resistance.
The barrel and the friction body may be firmly fixed directly or may be firmly fixed via a connecting member. The connecting member may also serve as the barrel (rear barrel).

### Examples

Examples will hereinafter be described but the present invention is not limited thereto. In the following Examples, all designations of "part" or "parts" means part or parts by weight.

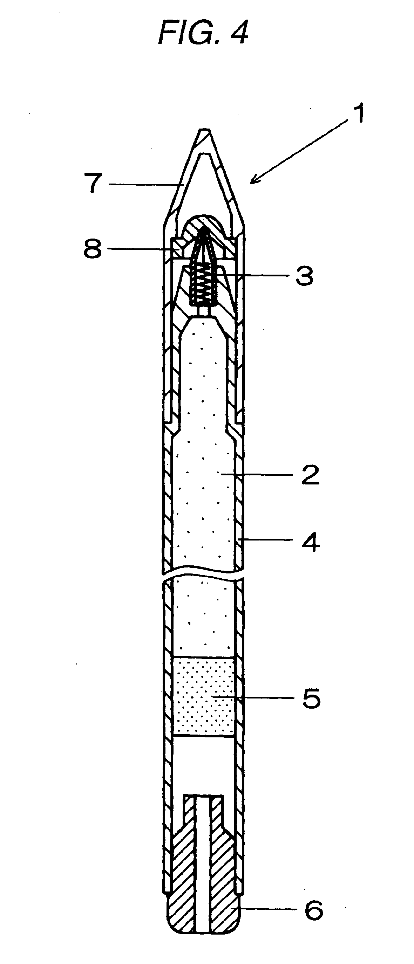

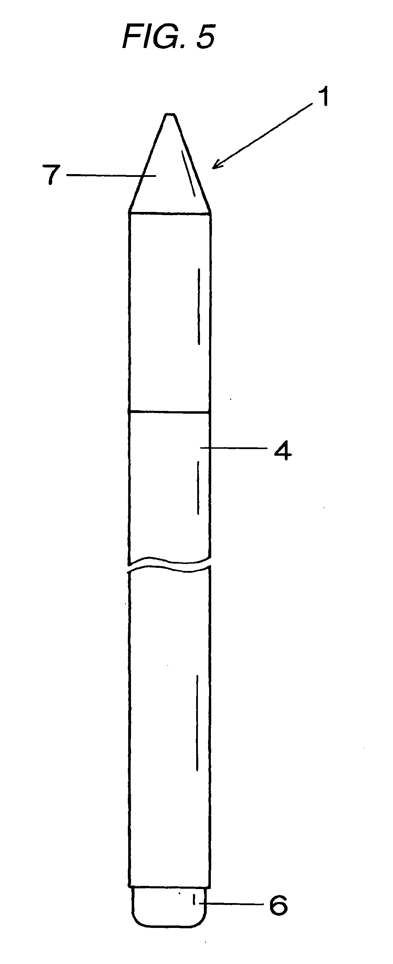

### [Example 1 (refer to FIGS. 4 and 5)]

### (Preparation of reversible thermochromic ink)

A reversible thermochromic ink was prepared which contains:
12.5 parts of a microencapsulated pigment (T₁: -2°C, T₂: 10°C, T₃: 35°C, T₄: 48°C, average particle size: 2.5 µm, a reversible thermochromic composition/wall membrane ratio = 2.6/1.0, the pigment undergoes a color change from red to colorless) containing a reversible thermochromic composition having a color memorizing property and contains:
as the component (i), 1.0 part of 1,2-benz-6-(N-ethyl-N-isoamylamino)fluoran and 2.0 parts of 1,3-dimethyl-6-diethylaminofluorane,
as the component (ii), 4.0 parts of 1,1-bis(4'-hydroxyphenyl)decane and 4.0 parts of 2,2-bis(4'-hydroxyphenyl)hexafluoropropane, and
as the component (iii) 50.0 parts of 4-methylbenzyl palmitate;
   0.33 part of succinoglycan (shear thinning agent),
   10 parts of urea,
   10 parts of glycerin,
   0.6 part of a nonionic penetration enhancer,
   0.1 part of a modified-silicone-based defoamer,
   0.1 part of a mildew proofing agent, and
   66.37 parts of water.

### (Production of writing instrument)

The ink 2 (the microencapsulated pigment cooled to -2°C in advance to develop a red color and then allowed to stand at room temperature) was filled in a polypropylene barrel 4 having, to the tip end portion thereof, a writing tip portion 3 (ballpoint pen tip) firmly fixed and having an inner diameter of 7 mm and outer diameter of 10 mm. An ink follower 5 composed mainly of polybutene and having a viscoelasticity was then filled in the barrel. A friction body 6 made of an SEBS resin was then fitted in the rear end portion of the barrel.
After a cap 7 having a rubber seal 8 therein was put into the obtained barrel, deaeration was performed by centrifugation to obtain a writing instrument 1 (ballpoint pen).
The ballpoint pen tip is obtained by setting a ball made of a stainless steel and having a diameter of 0.7 mm in a ball holding portion formed by machining a metal material with a drill and at the same time, biasing the ball forward by a spring.

The writing instrument thus obtained is fine and excellent in portability. It has an appearance like a pencil when the cap is fitted therein.
Red handwritings were formed by writing on paper with the writing instrument.
Of the handwritings formed on the paper, wrong ones or unnecessary ones were rubbed with the friction body. Then, they lost their color and became invisible. That state was maintained at room temperature so that a handwriting was formed again at the erased portion.

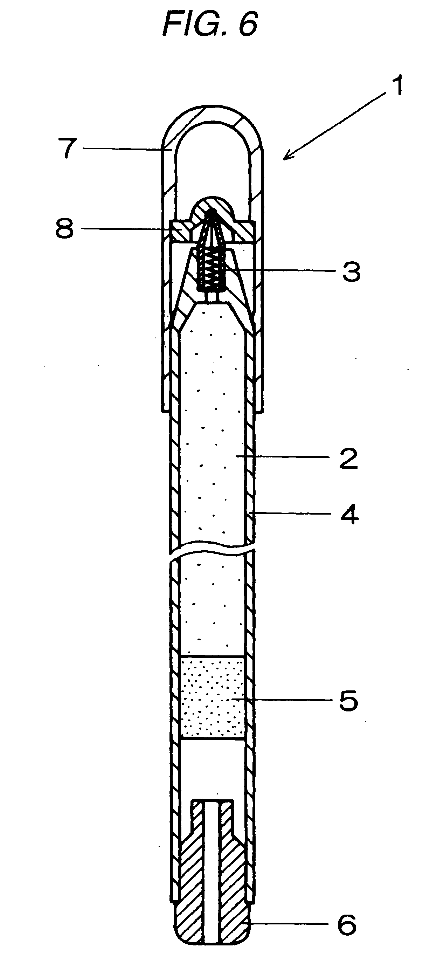

### [Example 2 (refer to FIG. 6)]

### (Preparation of reversible thermochromic ink)

A reversible thermochromic ink was prepared which contains:
12.5 parts of a microencapsulated pigment (T₁: -16°C, T₂: -8°C, T₃: 48°C, T₄: 58°C, ΔH: 65°C, average particle size: 2.5 µm, a reversible thermochromic composition/wall membrane ratio = 2.6/1.0, the pigment undergoes a color change from pink to colorless) containing therein a reversible thermochromic composition having a color memorizing property and contains:
as the component (i), 2.0 parts of 2-(butylamino)-8-(diphenylamino)-4-methylspiro [5H-[1]benzopyrano[2-3-g]pyrimidin-5,1(3'H)-isobenzofuran]-3-one,
as the component (ii), 5.0 parts of 2,2-bis(4'-hydroxyphenyl)hexafluoropropane and 3.0 parts of 4,4'-(2-methylpropylidene)bisphenol, and
as the component (iii) 50.0 parts of 4-benzyloxyphenylethyl caprate,
   0.33 part of succinoglycan (shear thinning agent),
   10 parts of urea,
   10 parts of glycerin,
   0.6 part of a nonionic penetration enhancer,
   0.1 part of a modified-silicone-based defoamer,
   0.1 part of a mildew proofing agent, and
   66.37 parts of water.

### (Production of writing instrument)

The ink 2 (the microencapsulated pigment cooled to -16°C in advance to develop a pink color and then allowed to stand at room temperature) was filled in a polypropylene barrel 4 having, to the tip end portion thereof, a writing tip portion 3 (ballpoint pen tip) firmly fixed and having an inner diameter of 6 mm and an outer diameter of 9 mm. An ink follower 5 composed mainly of polybutene and having a viscoelasticity was filled in the barrel. A friction body 6 made of an SEBS resin was then fitted in the rear end portion of the barrel.
After a cap 7 having a rubber seal 8 therein was put into the obtained barrel, deaeration was performed by centrifugation to obtain a writing instrument 1 (ballpoint pen).
The ballpoint pen tip is obtained by setting a ball made of a stainless steel and having a diameter of 0.5 mm in a ball holding portion formed by machining a metal material with a drill and at the same time, biasing the ball forward by a spring.

The writing instrument thus obtained is fine and excellent in portability. It has an appearance like a pencil when the cap is removed therefrom.
Pink handwritings were formed by writing on paper with the writing instrument.
Of the handwritings formed on the paper, wrong ones or unnecessary ones were rubbed with the friction body. Then, they lost their color and became invisible. That state was maintained at room temperature so that a handwriting was formed again at the erased portion.

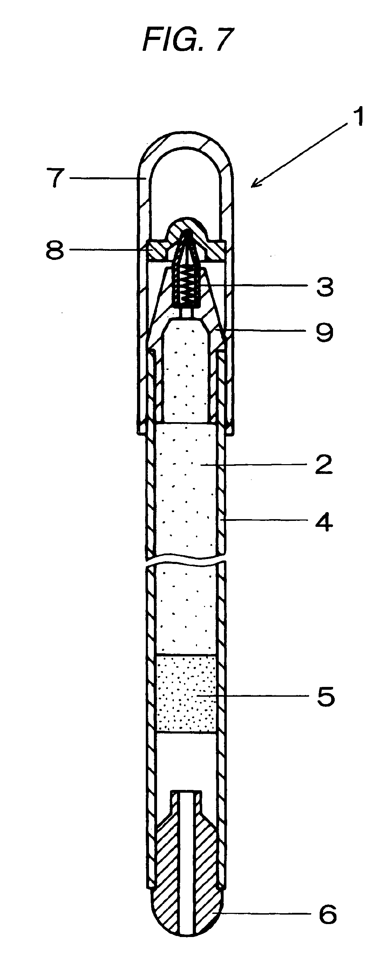

### [Example 3 (refer to FIG. 7)]

### (Preparation of reversible thermochromic ink)

A reversible thermochromic ink was prepared which comprised 25.7 parts of a microencapsulated pigment (T₁: -20°C, T₂: -9°C, T₃: 40°C, T₄: 57°C, ΔH: 63°C, average particle size: 2.5 µm, a reversible thermochromic composition/wall membrane ratio = 2.6/1.0, the pigment undergoes a color change from black to colorless) containing therein a reversibly thermochromic composition having a color memorizing property and contains:
as the component (i), 4.5 parts of 2-(2-chloroanilino)-6-di-n-butylaminofluorane,
as the component (ii), 4.5 parts of 4,4'-(2-methylpropylidene)bisphenol and 7.5 parts of 2,2-bis(4'-hydroxyphenyl)hexafluoropropane, and
as the component (iii) 50.0 parts of 4-benzyloxyphenylethyl caprate,
   0.2 part of succinoglycan (shear thinning agent),
   5.5 parts of urea,
   7.5 parts of glycerin,
   0.03 part of a nonionic penetration enhancer,
   0.15 part of a modified-silicone-based defoamer,
   0.1 part of a mildew proofing agent,
   0.5 part of a lubricant,
   0.5 part of triethanolamine, and
   59.82 parts of water.

### (Production of writing instrument)

The ink (the microencapsulated pigment cooled to -20°C in advance to develop a black color and then allowed to stand at room temperature) was filled in a polypropylene barrel 4 having, to the tip end portion thereof, a writing tip portion 3 (ballpoint pen tip) firmly fixed via a relay member 9 and having an inner diameter of 8 mm and an outer diameter of 11 mm. An ink follower 5 composed mainly of polybutene and having a viscoelasticity was filled in the barrel. A friction body 6 made of an SEBS resin was then fitted in the rear end portion of the barrel.
After a cap 7 having a rubber seal 8 therein was put into the obtained barrel, deaeration was performed by centrifugation to obtain a writing instrument 1 (ballpoint pen).
The ballpoint pen tip is obtained by setting a ball made of a stainless steel and having a diameter of 1.0 mm in a ball holding portion formed by machining a metal material with a drill and at the same time, biasing the ball forward by a spring.

The writing instrument thus obtained is fine and excellent in portability. It has an appearance like a pencil when the cap is removed therefrom.
Black handwritings were formed by writing on paper with the writing instrument.
Of the handwritings formed on the paper, wrong ones or unnecessary ones were rubbed with the friction body. Then, they lost their color and became invisible. That state was maintained at room temperature so that a handwriting was formed again at the erased portion.

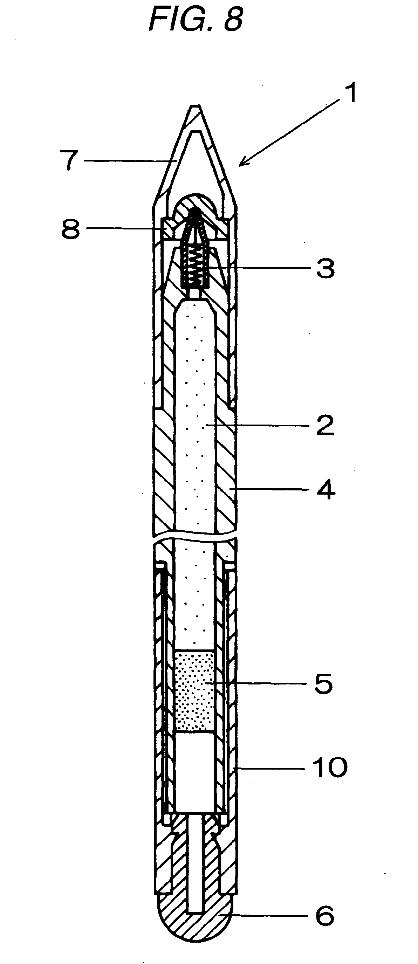

### [Example 4 (refer to FIG. 8)]

### (Preparation of reversible thermochromic ink)

A reversible thermochromic ink was prepared which contains:
25.7 parts of a microencapsulated pigment (T₁: -14°C, T₂: -6°C, T₃: 48°C, T₄: 60°C, ΔH: 64°C, average particle size: 2.5 µm, a reversible thermochromic composition/wall membrane ratio = 2.6/1.0, the pigment undergoes a color change from blue to colorless) containing therein a reversibly thermochromic composition having a color memorizing property and containing:
as the component (i), 2.0 parts of 3-(4-diethylamino-2-hexyloxyphenyl)-3-(1-ethyl-2-methylindol-3-yl)-4-azaphthalide,
as the component (ii), 3.0 parts of 4,4'-(2-methylpropylidene)bisphenol and 5.0 parts of 2,2-bis(4'-hydroxyphenyl)hexafluoropropane, and
as the component (iii), 50.0 parts of 4-benzyloxyphenylethyl caprate,
   0.2 part of succinoglycan (shear thinning agent),
   5.5 parts of urea,
   7.5 parts of glycerin,
   0.03 part of a nonionic penetration enhancer,
   0.15 part of a modified-silicone-based defoamer,
   0.1 part of a mildew proofing agent,
   0.5 part of a lubricant,
   0.5 part of triethanolamine, and
   59.82 parts of water.

### (Production of writing instrument)

The ink 2 (the microencapsulated pigment cooled to -14°C in advance to develop a blue color and then allowed to stand at room temperature) was filled in a polypropylene barrel 4 having, to the tip end portion thereof, a writing tip portion 3 (ballpoint pen tip) firmly fixed and having an inner diameter of 6 mm and an outer diameter of 9 mm. An ink follower 5 composed mainly of polybutene and having a viscoelasticity was filled in the barrel. A friction body 6 made of an SEBS resin was then fitted in the rear end portion of the barrel via a connecting member 10 (rear barrel).
After a cap 7 having a rubber seal 8 therein was put into the obtained barrel, deaeration was performed by centrifugation to obtain a writing instrument 1 (ballpoint pen).
The ballpoint pen tip is obtained by setting a ball made of a stainless steel and having a diameter of 0.7 mm in a ball holding portion formed by machining a metal material with a drill and at the same time, biasing the ball forward by a spring.

The writing instrument thus obtained is fine and excellent in portability. It has an appearance like a pencil when the cap is fitted therein.
Blue handwritings were formed by writing on paper with the writing instrument.
Of the handwritings formed on paper, wrong ones or unnecessary ones were rubbed with the friction body. Then, they lost their color and became invisible. That state was maintained at room temperature so that a handwriting was formed again at the erased portion.

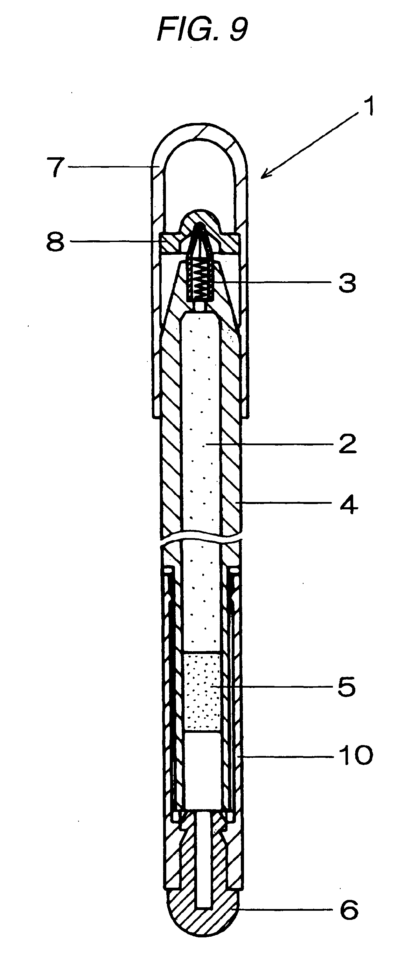

### [Example 5 (refer to FIG. 9)]

### (Preparation of reversible thermochromic microencapsulated pigment)

A reversible thermochromic ink was prepared which contains:
25.7 parts of a microencapsulated pigment (T₁: -8°C, T₂: -1 °C, T₃: 52°C, T₄: 65°C, ΔH: 63°C, average particle size: 2.5 µm, a reversible thermochromic composition/wall membrane ratio = 2.6/1.0, the pigment undergoes a color change from orange to colorless) containing therein a reversible thermochromic composition having a color memorizing property and containing:
as the component (i), 2.5 parts of 1,3-dimethyl-6-diethylaminofluorane,
as the component (ii), 5.0 parts of 2,2-bis(4'-hydroxyphenyl)hexafluoropropane and 3.0 parts of 4,4'-(2-methylpropylidene)bisphenol, and
as the component (iii) 50.0 parts of 4-benzyloxyphenylethyl laurate,
   0.2 part of succinoglycan (shear thinning agent),
   5.5 parts of urea,
   7.5 parts of glycerin,
   0.03 part of a nonionic penetration enhancer,
   0.15 part of a modified-silicone-based defoamer,
   0.1 part of a mildew proofing agent,
   0.5 part of a lubricant,
   0.5 part of triethanolamine, and
   59.82 parts of water.

### (Production of writing instrument)

The ink 2 (the microencapsulated pigment cooled to -8°C in advance to develop an orange color and then allowed to stand at room temperature) was filled in a polypropylene barrel 4 having, to the tip end portion thereof, a writing tip portion 3 (ballpoint pen tip) firmly fixed and having an inner diameter of 6 mm and outer diameter of 9 mm. An ink follower 5 composed mainly of polybutene and having a viscoelasticity was filled in the barrel. A friction body 6 made of an SEBS resin was then fitted in the rear end portion of the barrel via a connecting member 10 (rear barrel).
After a cap 7 having a rubber seal 8 therein was put into the obtained barrel, deaeration was performed by centrifugation to obtain a writing instrument 1 (ballpoint pen).
The ballpoint pen tip is obtained by setting a ball made of a stainless steel and having a diameter of 0.5 mm in a ball holding portion formed by machining a metal material with a drill and at the same time, biasing the ball forward by a spring.

The writing instrument thus obtained is fine and excellent in portability. It has an appearance like a pencil when the cap is removed therefrom.
Orange handwritings were formed by writing on paper with the writing instrument.
Of the handwritings formed on paper, wrong ones or unnecessary ones were rubbed with the friction body. Then, they lost their color and became invisible. That state was maintained at room temperature so that a handwriting was formed again at the erased portion.

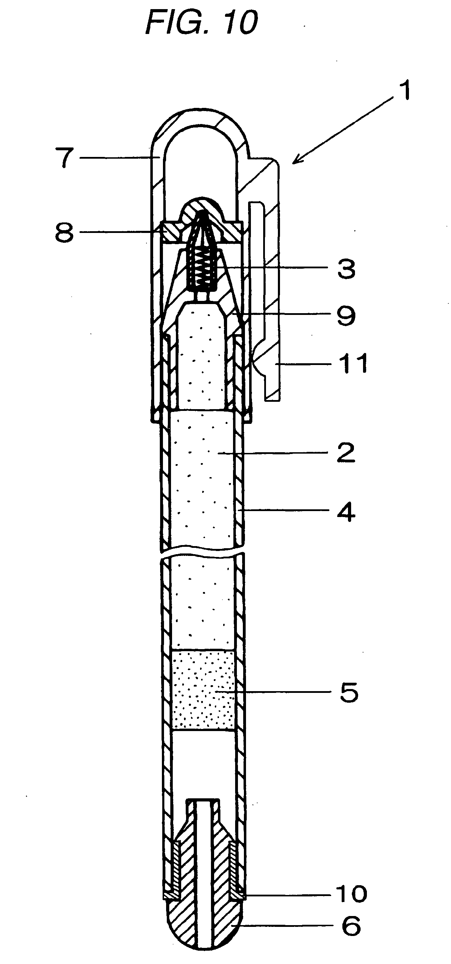

### [Example 6 (refer to FIG. 10)]

### (Preparation of reversible thermochromic ink)

A reversible thermochromic ink was prepared which contains:
12.5 parts of a microencapsulated pigment (T₁: -16°C, T₂: -8°C, T₃: 48°C, T₄: 58°C, ΔH: 65°C, average particle size: 2.5 µm, a reversible thermochromic composition/wall membrane ratio = 2.6/1.0, the pigment undergoes a color change from pink to colorless) containing therein a reversible thermochromic composition having a color memorizing property and containing:
as the component (i), 2.0 parts of 2-(butylamino)-8-(diphenylamino)-4-methylspiro[5H-[1]benzopyrano[2-3-g]pyrimidin-5,1(3'H)-isobenzofuran]-3-one,
as the component (ii), 5.0 parts of 2,2-bis(4'-hydroxyphenyl)hexafluoropropane and 3.0 parts of 4,4'-(2-methylpropylidene)bisphenol, and
as the component (iii) 50.0 parts of 4-benzyloxyphenylethyl caprate,
   0.33 part of succinoglycan (shear thinning agent),
   10 parts of urea,
   10 parts of glycerin,
   0.6 part of a nonionic penetration enhancer,
   0.1 part of a modified-silicone-based defoamer,
   0.1 part of a mildew proofing agent, and
   66.37 parts of water.

### (Production of writing instrument)

The ink (the microencapsulated pigment cooled to -16°C in advance to develop a pink color and then allowed to stand at room temperature) was filled in a polypropylene barrel 4 having, to the end portion thereof, a writing tip portion 3 (ballpoint pen tip) firmly fixed via a relay member 9 and having an inner diameter of 4 mm and an outer diameter of 8 mm. An ink follower 5 composed mainly of polybutene and having a viscoelasticity was filled in the barrel. A friction body 6 made of an SEBS resin was then fitted in the rear end portion of the barrel via a connecting member 10.
After a cap 7 having a rubber seal 8 therein and equipped with a clip 11 was put into the obtained barrel, deaeration was performed by centrifugation to obtain a writing instrument 1 (ballpoint pen).
The ballpoint pen tip is obtained by setting a ball made of a stainless steel and having a diameter of 0.6 mm in a ball holding portion formed by machining a metal material with a drill and biasing the ball forward by a spring.

The writing instrument thus obtained is fine and excellent in portability. It has an appearance like a pencil when the cap is removed therefrom.
Pink handwritings were formed by writing on paper with the writing instrument.
Of the handwritings formed on paper, wrong ones or unnecessary ones were rubbed with the friction body. Then, they lost their color and became invisible. That state was maintained at room temperature so that a handwriting was formed again at the erased portion.

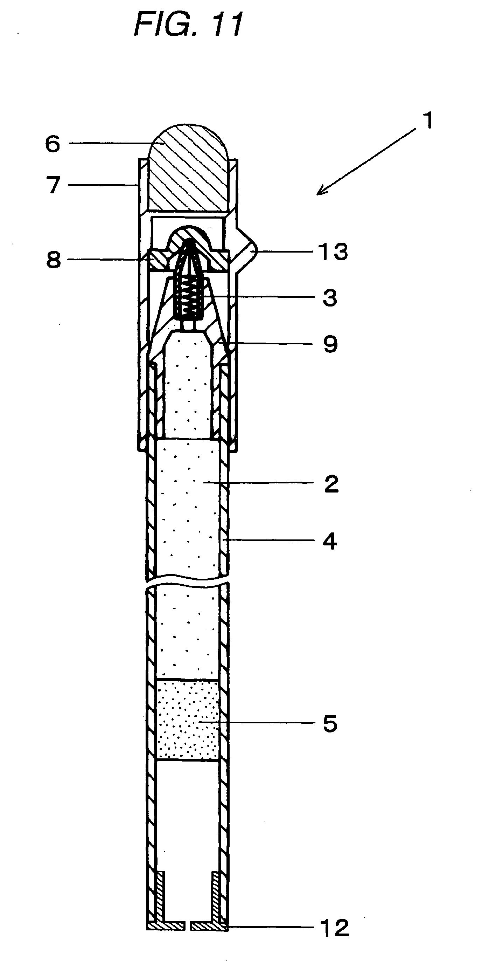

### [Example 7 (refer to FIG. 11)]

### (Preparation of reversible thermochromic ink)

A reversible thermochromic ink was prepared which contains:
25.7 parts of a microencapsulated pigment (T₁: -20°C, T₂: -9°C, T₃: 40°C, T₄: 57°C, ΔH: 63°C, average particle size: 2.5 µm, a reversible thermochromic composition/wall membrane ratio = 2.6/1.0, the pigment undergoes a color change from black to colorless) containing therein a reversible thermochromic composition having a color memorizing property and containing:
as the component (i), 4.5 parts of 2-(2-chloroanilino)-6-di-n-butylaminofluorane;
as the component (ii), 4.5 parts of 4,4'-(2-methylpropylidene)bisphenol and 7.5 parts of 2,2-bis(4'-hydroxyphenyl)hexafluoropropane; and
as the component (iii) 50.0 parts of 4-benzyloxyphenylethyl caprate,
   0.2 part of succinoglycan (shear thinning agent),
   5.5 parts of urea,
   7.5 parts of glycerin,
   0.03 part of a nonionic penetration enhancer,
   0.15 part of a modified-silicone-based defoamer,
   0.1 part of a mildew proofing agent,
   0.5 part of a lubricant,
   0.5 part of triethanolamine, and
   59.82 parts of water.

### (Production of writing instrument)

The ink (the microencapsulated pigment cooled to -20°C in advance to develop a black color and then allowed to stand at room temperature) was filled in a polypropylene barrel 4 having, to the end portion thereof, a writing tip portion 3 (ballpoint pen tip) firmly fixed via a relay member 9 and having an inner diameter of 5 mm and an outer diameter of 9 mm. An ink follower 5 composed mainly of polybutene and having a viscoelasticity was filled in the barrel. A tail plug 11 was then fitted in the rear end portion of the barrel.
After a cap 7 having a rubber seal 8 therein, equipped with a protrusion 13, and having a friction body 6 made of an SEBS resin fitted in the end portion of the cap was put in the barrel, deaeration was performed by centrifugation to obtain a writing instrument 1 (ballpoint pen).
The ballpoint pen tip is obtained by setting a ball made of a stainless steel and having a diameter of 0.8 mm in a ball holding portion formed by machining a metal material with a drill and at the same time, biasing the ball forward by a spring.

The writing instrument thus obtained is fine and excellent in portability. It has an appearance like a pencil when the cap is removed therefrom.
Black handwritings were formed by writing on paper with the writing instrument.
Of the handwritings formed on paper, wrong ones or unnecessary ones were rubbed with the friction body. Then, they lost their color and became invisible. That state was maintained at room temperature so that a handwriting was formed again at the erased portion.

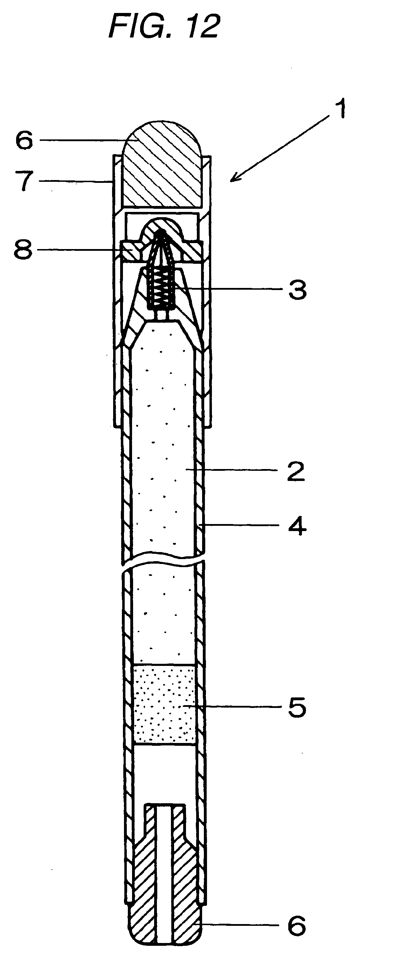

### [Example 8 (refer to FIG. 12)]

### (Preparation of reversible thermochromic ink)

A reversible thermochromic ink was prepared which contains:
25.7 parts of a microencapsulated pigment (T₁: -14°C, T₂: -6°C, T₃: 48°C, T₄: 60°C, ΔH: 64°C, average particle size: 2.5 µm, a reversible thermochromic composition/wall membrane ratio = 2.6/1.0, the pigment undergoes a color change from blue to colorless) containing therein a reversible thermochromic composition having a color memorizing property and containing:
as the component (i), 2.0 parts of 3-(4-diethylamino-2-hexyloxyphenyl)-3-(1-ethyl-2-methylindol-3-yl)-4-azaphthalide,
as the component (ii), 3.0 parts of 4,4'-(2-methylpropylidene)bisphenol and 5.0 parts of 2,2-bis(4'-hydroxyphenyl)hexafluoropropane, and
as the component (iii), 50.0 parts of 4-benzyloxyphenylethyl caprate,
   0.2 part of succinoglycan (shear thinning agent),
   5.5 parts of urea,
   7.5 parts of glycerin,
   0.03 part of a nonionic penetration enhancer,
   0.15 part of a modified-silicone-based defoamer,
   0.1 part of a mildew proofing agent,
   0.5 part of a lubricant,
   0.5 part of triethanolamine and
   59.82 parts of water.

### (Production of writing instrument)

The ink 2 (the microencapsulated pigment cooled to -14°C in advance to develop a blue color and then allowed to stand at room temperature) was filled in a polypropylene barrel 4 having, to the end portion thereof, a writing tip portion 3 (ballpoint pen tip) firmly fixed and having an inner diameter of 4 mm and an outer diameter of 9 mm. An ink follower 5 composed mainly of polybutene and having a viscoelasticity was filled in the barrel. A friction body 6 made of an SEBS resin was then fitted in the rear end portion of the barrel.
After a cap 7 having a rubber seal 8 therein and having another frictional body 6 made of an SEBS resin fitted in the end portion of the cap was put into the obtained barrel, deaeration was performed by centrifugation to obtain a writing instrument 1 (ballpoint pen).
The ballpoint pen tip is obtained by setting a ball made of a stainless steel and having a diameter of 0.4 mm in a ball holding portion formed by machining a metal material with a drill and at the same time, biasing the ball forward by a spring.

The writing instrument thus obtained is fine and excellent in portability. It has an appearance like a pencil when the cap is removed therefrom.
Blue handwritings were formed by writing on paper with the writing instrument.
Of the handwritings formed on paper, wrong ones or unnecessary ones were rubbed with the friction body. Then, they lost their color and became invisible. That state was maintained at room temperature so that a handwriting was formed again at the erased portion.
With the friction body disposed in the cap, handwritings of a smaller area were erased, while with the friction body disposed in the barrel, handwritings of a larger area were erased.

### [Example 9]

### (Production of writing instrument set)

The ink compositions prepared in Examples 1 to 5 were filled in the writing instruments of Example 1, respectively, to obtain a writing instrument set made of the five writing instruments.
In the writing instrument set, the writing instruments are fine and excellent in portability. They have an appearance like a pencil when the cap is fitted therein.
By writing on paper with the writing instruments, pictures in red color, pink color, black color, blue color, and orange color were formed.
Of the pictures drawn on paper, wrong ones or unnecessary ones were rubbed with the friction body. Then, they lost their color and became invisible. That state was maintained at room temperature so that a picture was drawn again at the erased portion.
The above-described writing instrument set may be a set of a plurality of writing instruments undergoing a change from colored to colorless and containing inks different from each other in color tone. Alternatively, it may be a set of writing instruments undergoing a change from colorless to colored and containing inks different from each other in color tone or a set of writing instruments undergoing a change from colored (1) to colored (2) and containing inks different from each other in color tone of the colored (1) or the colored (2).

Although the present invention has been described in detail or described referring to specific embodiments, it is apparent for those skilled in the art that various changes or modifications can be made without departing from the spirit or scope of the present invention. The present application is based on Japanese Patent Application (No. P.2006-282124) filed on October 17, 2006 and Japanese Patent Application (P.2006-331292) filed on December 8, 2006, the contents of which are incorporated herein by reference.

### INDUSTRIAL APPLICABILITY

The writing instrument according to the present invention can be produced at a lower cost than conventional thermochromic writing instruments utilizing frictional heat, is slim like a pencil and not bulky because an ink is filled directly in the barrel of the writing instrument, and is excellent in portability. Further, even when a writing instrument set capable of forming handwritings different in color tone is constructed of a plurality of the above-described writing instruments, it does not become bulky so that the present invention can provide a writing instrument set permitting carrying of many writing instruments different in color and therefore satisfying convenience.

## Claims

1. A writing instrument comprising:
a barrel in which a barrel with an ink which loses color, develops color, or changes color by heating; and an ink follower following the ink with consumption thereof are directly filled therein; and
a writing tip portion which is firmly fixed to an end of the barrel directly or via a relay member,
wherein a friction body having an elasticity is provided at a rear end portion of the barrel.

2. A writing instrument comprising:
a barrel in which an ink which loses color, develops color, or changes color by heating; and an ink follower following the ink with consumption thereof are directly filled therein;
a writing tip portion which is firmly fixed to an end of the barrel directly or via a relay member; and
a cap covering the writing tip portion therewith,
wherein a friction body having an elasticity is provided at a rear end portion of the barrel and/or an end portion of the cap.

3. The writing instrument according to Claim 1 or 2, wherein the barrel has a light blocking property.

4. The writing instrument according to any one of Claims 1 to 3, wherein the ink comprises a microencapsulated pigment which contains, therein, a reversible thermochromic composition comprising at least:
(i) an electron donating color-developing organic compound;
(ii) an electron accepting compound, and
(iii) a reaction medium for controlling a color reaction between the components
(i) and (ii) and changes color from colored to colorless by heating.

5. The writing instrument according to Claim 4,
wherein the microencapsulated pigment shows, in a color concentration-temperature curve thereof, large hysteresis characteristics, exhibits interchangeability between a first color phase and a second color phase, and the microencapsulated pigment has a two-phase retaining temperature range permitting co-existence of the first and second color phases within a normal temperature range;
in a first color-phase state and under a temperature rising stage, the pigment starts color change from the first color phase when the pigment reaches a second temperature T₃, and the pigment becomes the second color phase completely in a temperature range of at least a temperature T₄ higher than the second temperature T₃,
in a second color-phase state and under a temperature reducing stage, the pigment starts color change from the second color phase when the pigment reaches a first temperature T₂ lower than the second temperature T₃, and the pigment becomes the first color phase completely in a temperature range not greater than a temperature T₁ lower than the first temperature T₂,
the pigment shows, in a temperature range between the first temperature T₂ and the second temperature T₃, hysteresis characteristics permitting co-existence of both the first color phase and the second color phase,
the temperature T₁ is ranging from -30 to 10°C; and
the temperature T₄ is ranging from 30 to 80°C.

6. The writing instrument according to any one of Claims 1 to 5, wherein the friction body is selected from elastomers and plastic foams.

7. The writing instrument according to any one of Claims 1 to 6, wherein the barrel and the friction body are firmly fixed to each other via a connecting member.

8. The writing instrument according to Claim 7, wherein the connecting member also serves as the barrel.

9. The writing instrument according to any one of Claims 1 to 8, wherein the writing tip portion is a ballpoint pen tip.

10. A writing instrument set comprising a plurality of the writing instruments as claimed in any one of Claims 1 to 9, wherein the writing instruments are filled with inks different from each other in color tone, respectively.
